Europäisches Patentamt

European Patent Office

Office européen des brevets

(19)

(11) Numéro de publication: **0 052 556**
**B2**

(12) NOUVEAU FASCICULE DE BREVET EUROPEEN

(45) Date de publication du nouveau fascicule du brevet: **01.08.90**

(51) Int. Cl.⁵: **C 08 L 23/02**, C 08 L 53/00

(21) Numéro de dépôt: **81401764.6**

(22) Date de dépôt: **04.11.81**

(54) **Compositions de polypropylène à haute résistance au choc.**

(30) Priorité: **13.11.80 FR 8024095**

(43) Date de publication de la demande:
**26.05.82 Bulletin 82/21**

(45) Mention de la délivrance du brevet:
**30.01.85 Bulletin 85/05**

(45) Mention de la decision concernant l'opposition:
**01.08.90 Bulletin 90/31**

(84) Etats contractants désignés:
**AT BE CH DE FR GB IT LI NL SE**

(56) Documents cités:
**EP-A-0 006 620**
**DE-A-2 417 093**
**DE-A-2 742 910**
**DE-A-2 821 342**
**DE-A-2 849 114**
**DE-A-2 917 451**
**FR-A-1 456 359**
**FR-A-1 488 559**
**FR-A-1 509 720**
**FR-A-2 441 643**
**FR-A-2 456 130**
**FR-A-2 666 721**
**GB-A-1 046 254**

(73) Titulaire: **BP Chimie Société Anonyme
Tour Neptune - La Défense 1 20, place de Seine
F-92400 Courbevoie (FR)**

(72) Inventeur: **Thiersault, Jean Paul
7, Lotissement la Croix d'Aymard
F-13920 Saint Mitre Les Remparts (FR)**
Inventeur: **Senez, Alain
1, rue de la Lavande
F-13480 Callas-Cabries (FR)**

(74) Mandataire: **Patentanwälte Beetz sen. - Beetz
jun. Timpe - Siegfried - Schmitt-Fumian
Steinsdorfstrasse 10
D-8000 München 22 (DE)**

(56) Documents cited:
**GB-A-1 355 245**
**NL-A-6 701 428**
**US-A-3 562 790**
**US-A-4 087 485**
**US-A-4 251 646**

**Derwent abstracts 66995 C/38, 36143 B/19**

EP 0 052 556 B2

Courier Press, Leamington Spa, England.

## Description

L'invention a pour objet des compositions de polypropylène ayant une haute résistance au choc, susceptibles d'être préparées à l'aide de machines d'extrusion courantes. Elle se rapporte plus particulièrement à des compositions de polypropylène destinées à la fabrication de pièces industrielles, telles que pièces pour automobiles ou appareils de manutention.

Il est connu que les objets en polypropylène isotactique sont relativement peu résistants au choc aux températures courantes d'utilisation et qu'ils sont en particulier très fragiles à des températures inférieures à 5°C.

Pour remédier à cet inconvénient, diverses méthodes ont déjà été employées. Il est notamment connu que l'incorporation au polypropylène d'élastomères divers tels que des copolymères amorphes d'éthylène et de propylène améliore sensiblement sa résistance au choc, notamment aux basses températures. Il a également été proposé de préparer des mélanges ternaires constitués de polypropylène, de polyéthylène et d'élastomères qui sont plus solides que les mélanges binaires cités ci-dessus. Ces mélanges ternaires sont généralement constitués, comme cela est décrit par exemple dans le brevet français No. 1 456 359, de 70% à 94% en poids de polypropylène isotactique, de 5 à 20% en poids d'élastomère de type copolymère amorphe d'éthylène et de propylène et de 1 à 25% en poids de polyéthylène de haute densité, comprise de préférence entre 0,95 et 0,97.

Tous ces mélanges connus comportant un élastomère ont des propriétés d'autant meilleures que le mélange des constituants est plus intimement réalisé. Il est donc recommandé d'avoir recours, pour leur préparation, à un malaxage très efficace, suceptible d'être réalisé seulement par des machines du type des mélangeurs internes tels que des malaxeurs Banbury qui sont des matérials coûteux en investissement et en énergie, faute de quoi les mélanges obtenus ont des propriétés mécaniques relativement médiocres, notamment en ce qui concerne la résistance au choc.

Pour améliorer le mélange des constituants et en même temps les propriétés mécaniques des produits obtenus, il a également été proposé, selon le brevet français No. 2 113 130, de préparer des mélanges ternaires de même type que ceux déjà cités plus haut, en mettant les constituants du mélange en solution dans un solvant approprié, puis en éliminant le solvant de cette solution au moyen d'une vaporisation par détente dans des conditions de pression et de température telles qu'on obtienne un mélange de polymère fondu quasi exempt de solvant. Cette technique est toutefois difficile à mettre en œuvre. Elle exige notamment l'utilisation d'autoclaves susceptibles de maintenir sous agitation des solutions visqueuses de polymères.

La demanderesse a maintenant trouvé des compositions constituées essentiellement de polypropylène isotactique, d'élastomère et de certains copolymères d'éthylène et d'une ou plusieurs alpha-oléfines supérieures du type généralement appelé polyéthylène de basse densité linéaire (PEBDL), ces compositions présentant des propriétés mécaniques et notamment une résistance au choc nettement améliorées par rapport aux mélanges ternaires antérieurement connus cités ci-dessus, ces compositions étant en outre très faciles à préparer par simple mélange à l'état fondu dans des extrudeuses de type courant.

L'invention concerne donc des compositions de polypropylène à haute résistance au choc constituées de:

a) 50 à 97% en poids de polypropylène isotactique
b) 2 à 49% en poids d'élastomères
c) 1 à 25% en poids de polyéthylène de basse densité linéaire, de densité inférieure ou égale à 0.935.

Selon l'invention, le polypropylène isotactique utilisé peut avoir un poids moléculaire moyen compris entre 50 000 et 500 000. Il est possible d'employer les qualités de polypropylène habituelles, disponibles sur le marché qui sont pratiquement isotactiques et qui conviennent pour les applications courantes de l'injection ou de l'extrusion.

Comme élastomères on peut utiliser une grande variété de produits tels que par exemple des caoutchoucs butyl, PIB, SBS. Toutefois, on utilise de préférence des èlastomères de type « EPM » qui sont des compolymères caoutchouteux d'éthylène et de propylène contenant d'environ 30 à 70% en poids, de préférence d'environ 40 à 60% en poids de motifs dérivés du propylène. On peut également utiliser avantageusement des terpolymères caoutchouteux d'éthylène, de propylène et d'un diène tel que par exemple le dicyclopentadiène, l'éthylidène norbornène ou l'exadiène-1-4, ces terpolymères étant appelés généralement élastomères "EPDM".

Il est également possible de remplacer dans les compositions selon l'invention tout ou partie de l'élastomère mis en œuvre par une séquence de copolymérisation d'un mélange équivalent en poids d'éthylène et de propylène contenant de 20 à 70% en poids de propylène, cette séquence de copolymérisation statistique étant réalisée par exemple entre deux séquences de synthèse de polypropylène ou, de préférence, juste après la fin de cette synthèse.

Le polyéthylène de basse densité linéaire utilisé est obtenu par copolymérisation, pour 80 à 96% en poids, d'éthylène et, pour 4 à 20% en poids, d'une ou plusieurs alpha-oléfines supérieures comportant de 3 à 8 atomes de carbone, choisies notamment parmi le propylène, le n-butène-1, le n-hexène-1, le methyl-4-

2

pentène-1 ou le n-octène-1, la copolymérisation des monomères étant effectuée en mélange selon l'un des procédés sous basse pression connus, en particulier sous une pression inférieure à $4 \cdot 10^6$ Pa, en présence d'un système catalytique de type Ziegler.

Le polyéthylène de basse densité linéaire est obtenu par copolymérisation réalisée en phase gazeuse. En particulier il peut être avantageusement préparé selon le procédé de copolymérisation d'éthylène et d'alpha-oléfine supérieure en lit fluidisé décrit dans le brevet français No. 2 405 961.

On a tourvé en effet, que les polyéthylènes de basse densité linéaires préparés selon ce procédé de copolymérisation en lit fluidisé ont une structure bien particulière et apportent aux compositions selon l'invention des propriétés remarquables et avantageuses.

Cette structure bien particulière peut être mise en évidence notamment par analyse enthalpique différentielle qui révèle en effet que ces polyéthylènes de basse densité linéaires préparés en lit fluidisé comportent à côté d'une phase cristalline de point de fusion supérieur à 115°C, une phase amorphe relativement importante dont la plage de fusion assez étalée est inférieure à 115°C.

Le mélange des constituants des compositions selon l'invention est de préférence réalisé à l'état fondu. Une méthode efficace consiste à mélanger d'abord les granulés ou poudres des constituants, puis à réaliser le mélange à l'état fondu dans des machines de type courant telles que des extrudeuses monovis ou double vis, ces opérations étant suivies d'une granulation. Dans certains cas, il est possible dans réaliser le mélange à l'état fondu directement à partir des granulés ou des poudres des constituants dans les machines de transformation (extudeuses, presses à injecter) en objets finis.

Diverses charges minérales telles que le talc, le carbonate de calcium ou le mica peuvent être incorporées aux compositions selon l'invention, jusqu'à concurrence de 100% environ de leur poids.

Les compositions selon l'invention éventuellement additionnées de charges conviennent particulièrement bien pour la fabrication de pièces diverses pour automobiles telles que par exemple les parechocs ou les planches de bord.

Sans être limitatifs, les exemples ci-après illustrent les avantages présentés par les mélanges selon l'invention sur les mélanges antérieurement connus. Dans ces exemples, les PEBDL mis en œuvre sont préparés selon un procédé de copolymérisation en lit fluidisé. Ils possèdent les caractéristiques suivantes:

« Natène BD 302 » — Copolymère d'éthylène et de propylène.
— Indice de fluidité sous 2,16 kg à 190°C : 2 (Norme NFT 51016-Méthode A)
— Densité (Norme NFT 51063) : 0.920
—Teneur en motifs dérivés du propylène : 12% en poids.

« Natène BD 403 » — Copolymère d'éthylène et de n-butène-1.
— Indice de fluidité sous 2,16 kg à 190°C : 21,5(Norme NF T 51016-Méthode A)
— Densité (Norme NF T 51063) : 0,928
— Teneur en motifs dérivés du n-b tène : 6,7% en poids.

Les polyéthylènes utilisés à l'exemple à **titre de comparaison** ont les caractéristiques suivantes:

Polyéthylène haute densite « Natène 50060 AG » — Homopolymère d'éthylène :
— Densité : 0,960
— Indice de fluidité sous 2,16 kg et à 190°C : 0.6

Polyéthylène haute pression obtenu par polymérisation radicalaire d'éthylène sous haute pression :
— Densité : 0,920
— Indice de fluidité sous 2,16 kg à 190°C : 2

Exemple 1

On prépare sur une granulatrice Werner 28 à double vis deux compositions A et B comportant chacune d'une part 80 parties en poids de polypropylène homopolymère "Napryl 61200 Ag" (indice de fluidité de 3 sous 2,16 kg à 230°C) et 14 parties en poids d'èlastomére EPDM "Napryl 1500" (Du Pont) et d'autre part respectivement 6 parties en poids de "Natène BD 302" et 6 parties en poids de "Natène Bd 403". A titre de comparaison on réalise des compositions analogues en remplaçant le "Natène BD 302 ou BD 403" par du polyéthylène "haute pression" (composition C), puis par un polyéthylène "haute densité" de marque "Natène 60060 Ag" (composition D).

Les propriétés mécaniques des plaques moulées à partir de ces quatre compositions ternaires sont indiquées dans le tableau 1 en comparaison avec celles d'un mélange binaire "Napryl 61200 Ag"/"Nordel 1500" dans les proportions 85/15 (composition E). Dans ces conditions, les quatre compositions ternaires correspondent sensiblement à une dilution du mélange binaire par quatre polyéthylènes de types différents.

On constate que les quatre compositions ternaires présentent une résistance à la traction et un allongement à la rupture sans changement par rapport au mélange binaire "Napryl 61200 Ag"/"Nordel 1500". Par contre, les résistances au choc Charpy des compositions ternaires à 6 parties en poids de PEBDL

3

## EP 0 052 556 B2

("Natène BD 302" ou "Natène BD 403") sont nettement supérieures à celles des autres compositions ternaires à 6 parties en poids de polyéthylène "haute densité" ("Natène 60060 AG") ou de polyéthylène "haute pression" et à celle du mélange binaire "Napryl 61200 Ag"/"Nordel 1500". Cet avantage est surtout marqué au voisinage de la température ambiante.

### Exemple 2

On prépare par passage sur extrudeuse Werner 28 à double vis une composition selon l'invention comportant:

— 90 parties en poids de polypropylène copolymère séquencé "Napryl 51351 AG", d'indice de fluidité sous 2,16 kg à 230°C égal à 3,5, constitué, pour 90% en poids, d'une séquence d'homopolymérisation de propylène suivie, pour 10% en poids d'une séquence de compolymérisation d'un mélange composé de 70% en poids d'éthylène et de 30% en poids de propylène;

— 10 parties en poids de PEBDL "Natène BD 302"

A titre de comparaison on traite sur la même extrudeuse et dans les mêmes conditions du "Napryl 51351 AG" seul.

Le tableau 2 montre que la composition au "Natène BD 302" présente une résistance au choc nettement supérieure à celle du polypropylène seul, la perte de rigidité représentée par la diminution de la résistance à la traction étant par ailleurs faible.

"Natène" et "Napryl" sont des marques de fabrique déposées de matières plastiques respectivement de type polyéthylène et polypropylène, vendues par BP CHIMIE S. A.

"Nordel" est une marque de fabrique déposée concernant un élastomère de type copolymère d'éthylène, de propylène et de diène, encore appelé communément EPDM, vendu par DU PONT DE NEMOURS.

Il convient donc d'entendre dans la description et les exemples ci-dessus "Natène"® pour "Natène", "Napryl"® pour "Napryl" et "Nordel"® pour "Nordel".

### TABLEAU 1

Propriétés mécaniques des différents mélanges

| Compositions ou mélanges | A | B | C | D | E |
|---|---|---|---|---|---|
| "Napryl 61 200 AG" (parties en poids) | 80 | 80 | 80 | 80 | 85 |
| "Nordel 1500" (parties en poids) | 14 | 14 | 14 | 14 | 15 |
| "Natène BD 302" (parties en poids) | 6 | | | | |
| "Natène BD 403" (parties en poids) | | 6 | | | |
| Polyéthylène HP (parties en poids) | | | 6 | | |
| "Natène 60060 AG" (parties en poids) | | | | 6 | |
| Résistance traction (M Pa) | 24 | 24 | 24 | 24 | 24 |
| Allongement à la rupture (%) | 650 | 650 | 650 | 650 | 650 |
| Résistance au choc Charpy (KJ/m$^2$) à 23°C | 16 | 13 | 8 | 11 | 10 |
| à 0°C | 5 | 5 | 4 | 4 | 4 |

TABLEAU 2

| | | |
|---|---|---|
| "Napryl 51351 AG" (parties en poids) | 100 | 90 |
| FEBDL "Natène BD 302" (parties en poids) | 0 | 10 |
| Résistance à la traction (MPa) | 24,5 | 22,5 |
| Allongement à la rupture (%) | 600 | 500 |
| RÉsistance au choc Charpy (KJ/m²) à 23°C | 11 | 16 |
| à 0°C | 5 | 7,5 |

Les mesures des diverses propriétés citées ont été effectuées selon les normes suivantes:

| Mesures | Norme Française (NF) |
|---|---|
| Indice de fluidité | NF T 51016 |
| Densité | NF T 51063 |
| Résistance à la traction | NF T 51034 |
| Résistance au choc Charpy | NF T 51035 |

Mesures particulières sur film

| | |
|---|---|
| Résistance à la déchirure | NF T 54108 |
| Résistance à la perforation | NF T 54109 |

**Revendications**

1. Compositions de polypropylène à haute résistance au choc caractérisées en ce qu'elles sont constituées d'un mélange de:
   a) 50 à 97% en poids de polypropylène isotactique
   b) 2 à 49% en poids d'élastomère
   c) 1 à 25% en poids de polyéthylène de basse densité linéaire, de densité inférieure ou égale à 0,935, obtenu par copolymérisation en phase gazeuse en présence d'un catalyseur de type Ziegler, pour 80 à 96% en poids d'éthylène et, pour 4 à 20% en poids d'une ou plusieurs alpha-oléfines supérieures comportant de 3 à 8 atomes de carbone, sous une pressions inférieure à $4.10^6$ Pa.

2. Compositions revendiquées en 1, comprenant, comme elastomère, un caoutchouc de type EPM ou EPDM.

3. Compositions revendiquées en 1, selon lesquelles l'élastomère est en partie ou totalement incorporé à la composition par réalisation en fin ou au cours de la synthèse du polypropylène isotactique, d'un ou plusieurs étapes de copolymérisation statistique d'un mélange d'éthylène et de propylène, contenant d'environ 20% à environ 70% en poids de propylène.

4. Compositions revendiquées en 1, selon lesquelles le polyéthylène de basse densité linéaire est obtenu par copolymérisation d'éthylène et d'un ou plusierus alpha-oléfines supérieures choisies parmi le propylène, le n-butène-1, n-hexène-1, le méthyl-4-pentène-1, ou le n-octène-1.

5. Compositions revendiquées en 1, selon lesquelles le polyéthylène de basse densité linéaire est obtenu par copolymérisation réalisée en phase gazeuse.

6. Compositions revendiquées en 1, additionnées jusqu'à 100% de leur poids de charges minérales.

7. Procédé de préparation des compositions revendiquées en 1, qui consiste à effectuer le mélange des constituants à l'état fondu.

8. Procédé revendiqué en 7, selon lequel les constituants sont d'abord mélangés sous forme de pondre, puis melangés à l'état fondu dans des machines d'extrusion de type courant.

9. Application des compositions revendiquées en 1, à la fabrication de piéces diverses à haute résistance au choc telles que pare-chocs et planches de bord pour automobiles.

# EP 0 052 556 B2

## Patentansprüche

1. Polypropylen-Zusammensetzungen mit hoher Schlagzähigkeit, dadurch gekennzeichnet, daß sie bestehen aus einem Gemisch aus
a) 50 bis 97 Gew.-% isotaktischem Polypropylen,
b) 2 bis 49 Gew.-% Elastomer und
c) 1 bis 25 Gew.-% linearem Polyethylen niederer Dichte mit einer Dichte $\leq$ 0,935, dans erhalten ist durch Copolymerisation vòn 80 bis 96 Gew.-% Ethylen und 4 bis 20 Gew.-% eines oder mehrerer höherer α-Olefine mit 3 bis 8 Kohlenstoffatomen unter einem Druck $< 4 \cdot 10^6$ Pa in der Gasphase in Gegenwart eines Ziegler-Katalysators.

2. Zusammensetzungen nach Anspruch 1, dadurch gekennzeichnet, daß sie als Elastomer einen EPM- oder EPDM-Kautschuk enthalten.

3. Zusammensetzungen nach Anspruch 1, dadurch gekennzeichnet, daß das Elastomer teilweise oder ganz am Ende oder während der Synthese des isotaktischen Polypropylens in einer oder mehreren Stufen der stastistischen Copolymerisation eines Gemischs aus Ethylen und Propylen mit einem Propylengehalt von etwa 20 bis etwa 70 Gew.-% in die Zusammensetzung eingebaut ist.

4. Zusammensetzungen nach Anspruch 1, dadurch gekennzeichnet, daß das lineare Polyethylen niederer Dichte durch Copolymerisation von Ethylen mit einem oder mehreren höheren α-Olefinen erhalten ist, die unter Propylen, n-Buten-1, n-Hexen-1, 4-Methylpenten-1- und n-Octen-1 ausgewählt sind.

5. Zusammensetzungen nach Anspruch 1, dadurch gekennzeichnet, daß das lineare Polyethylen niederer Dichte durch Copolymerisation in der Gasphase erhalten ist.

6. Zusammensetzungen nach Anspruch 1, dadurch gekennzeichnet, daß sie anorganische Füllstoffe in einer Menge von bis zu 100% ihres Gewichts enthalten.

7. Verfahren zur Herstellung der Polypropylen-Zusammensetzungen nach Anspruch 1, dadurch gekennzeichnet, daß die Bestandteile in geschmolzenem Zustand gemischt werden.

8. Verfahren nach Anspruch 7, dadurch gekennzeichnet, daß die Bestandteile zunächst in Pulverform gemischt und anschließend in geschmolzenem Zustand in üblichen Extrudern gemischt werden.

9. Verwendung der Polypropylen-Zusammensetzungen nach Anspruch 1 zur Herstellung verschiedener Gegenstände mit hoher Schlagzähigkeit wie Stoßstangen und Armaturenbretter von Kraftfahrzeugen.

## Claims

1. Polypropylene compositions of high impact strength, characterized in that they consist of a mixture comprising
a) 50 to 97% by weight of isotactic polypropylene,
b) 2 to 49% by weight of elastomer and
c) 1 to 25% by weight of linear low density polyethylene having a density $\leq$ 0.935, obtained by copolymerizing 80 to 96% per weight of ethylene with 4 to 20% by weight of one or more higher α-olefins comprising 3 to 8 carbon atoms at a pressure $< 4 \cdot 10^6$ Pa in the gas phase in the presence of a Ziegler type catalyst.

2. Compositions according to claim 1, characterized in that the elastomer is an EPM or EPDM type rubber.

3. Compositions according to claim 1, characterized in that all or part of the elastomer is incorporated in the composition by carrying out one or more stages of statistical copolymerization of a mixture of ethylene and propylene, containing about 20% to about 70% of propylene, at the end of or during the synthesis of the isotactic polypropylene.

4. Compositions according to claim 1, characterized in that the linear low density polyethylene is obtained by copolymerization of ethylene with one or more higher α-olefins, selected from propylene, n-butene-1, n-hexene-1, 4-methyl-pentene-1 and n-octene-1.

5. Compositions according to claim 1, characterized in that the linear low density polyethylene is obtained by gas phase copolymerization.

6. Compositions according to claim 1, characterized in that inorganic fillers are added in quantities of up to 100% of their weight.

7. Method for preparing the compositions according to claim 1, characterized by mixing the constituents in the molten state.

8. Method according to claim 7, characterized in that the constituents are first mixed in powder form, and then mixed in the molten state in an extruder of usual type.

9. Application of the compositions according to claim 1 to the manufacture of various articles with high impact strength, such as bumpers and dashboards for cars.

6